# EUROPEAN PATENT SPECIFICATION

(11) **EP 1 094 701 B1**
(45) Date of publication and mention of the grant of the patent: **28.11.2001**
(21) Application number: 99929702.1
(22) Date of filing: 01.07.1999
(51) Int. Cl.: A01K 63/04, B01F 3/04, C02F 3/24, C02F 7/00

(54) **APPARATUS FOR OXYGENATING WATER**
VORRICHTUNG ZUR SAUERSTOFFANREICHERUNG VON WASSER
APPAREIL D'OXYGENATION DE L'EAU

(30) Priority: 08.07.1998 IT RE980071
(43) Date of publication of application: 02.05.2001
(73) Proprietor: Becchi, Silvano, 42023 Cadelbosco Di Sopra (Reggio Emilia) (IT)
(72) Inventor: Becchi, Silvano, 42023 Cadelbosco Di Sopra (Reggio Emilia) (IT)
(74) Representative: Lanzoni, Luciano
(86) International application number: IT9900197
(87) International publication number: WO0002443

(56) References cited:
- EP-A- 0 477 462
- EP-A- 0 521 241
- GB-A- 1 290 308
- GB-A- 1 596 945
- US-A- 4 741 869

## Description

### Technical Field

The present invention relates to a floating apparatus intended to improve the oxygenation of water in a basin, by way of an aid to use of the known agitating and aeration devices, to be used in particular in the sector of aquiculture and treatment of waste water and industrial effluent.

### Background art

Apparatus, both of the fixed type and of the floating type, which enrichen the water of a basin with oxygen, causing intense agitation and mixing between water and the overlying atmosphere, are known.

Agitation of the water may be performed by low or high speed propellers, or by rotating paddles, rollers or rotating disks, basically resulting in an increase in the area of exchange between water and overlying atmosphere and therefore an increase in the amount of oxygen which passes into the water.

In order to increase the partial oxygen pressure and hence enrichen the water with oxygen, apparatus provided with a casing enclosing the atmosphere situated above the water, so as to define a closed volume into which pure oxygen is supplied, are known.

For example, EP 0,477,462 discloses the mounting of a dome, connected to a frame, onto a floating apparatus which is able to produce a stream of water upwards, the inside of the dome being supplied with pure oxygen by means of a pipe.

The known floating apparatus for oxygenating water have, however, the considerable drawback that they are unable to control the flow of oxygen in relation to the transfer thereof into the water of the basin.

In fact, the absorption of oxygen by the water may vary considerably over time, during operation of the apparatus, depending on many factors, including - to mention only the main ones - the water temperature, the degree of atomization of the water caused by the agitating device located under the dome, the initial oxygen content of the water to be oxygenated, etc.

The known apparatus for oxyenating water do not envisage any system for controlling or modulating the rate of flow of the oxygen to the apparatus.

The result is that, should the rate of flow of the oxygen to the apparatus be excessive, the part which is not transferred into the water is discharged into the atmosphere. For example, in EP 0,477,462 this is performed by uncovering one or more openings, it being envisaged that the dome is rigidly connected to the floating equipment by means of a frame and there being a general raising of the entire apparatus due to raising of the dome in relation to the high pressure which is created inside it, resulting in the considerable waste of oxygen, which, as is well known, has a high cost. Also, GB-A-1290308 introduces the general idea of regulating the internal pressure in the dome: but none of the cited prior art shows the means used for regulating the pressure.

Should, however, one wish to avoid the dispersion, into the atmosphere, of the oxygen which is not transferred into the water, it is therefore required to limit the rate of flow thereof to the oxygenation apparatus and therefore basically the apparatus will be made to function below its real oxygenation potential, so as to avoid exceeding the limit where the openings for discharge into the atmosphere are uncovered.

By way of conclusion, therefore, the known apparatus for oxgenating water in reality have very low transfer levels and no operational flexibility since it is practically impossible to regulate the rate of flow of the oxygen so that it is equal to the rate of transfer into the water.

Moreover the known apparatus for oxygenating water consist of heavy and complex machines since both the dome and the agitating equipment connected to it form a single machine and it is not possible to increase the operation of already existing agitation and aeration equipment so as to adapt them to operation with oxygen and thereby increase their performance.

Said known apparatus must therefore consist of machines which are wholly designed and constructed for that purpose and cannot be obtained using agitation equipment which is already commercially available and already installed and in operation.

The object of the present invention is that of providing an apparatus for enriching water in basins with oxygen, which can be adapted to any existing floating aeration or agitation equipment.

A further object is that of controlling use of the oxygen, avoiding dispersion, into the atmosphere, of that part of oxygen which is not used.

### Summary of the invention

These objects are achieved by arranging, above a device for mixing/oxygenating water, an inflatable cover on a floating raft, it being envisaged that floating of the raft is independent from that of the aeration/oxygenation device, and by shutting off the pipe supplying the oxygen to the inflatable cover by means of a valve which is integral with the raft and controlled by a float.

### Brief description of the drawings

The invention will emerge more clearly from the description of three examples of embodiment illustrated hereinbelow with the aid of three plates of drawings.

In these plates, Figs. 1, 2 and 3 show a first example of embodiment;

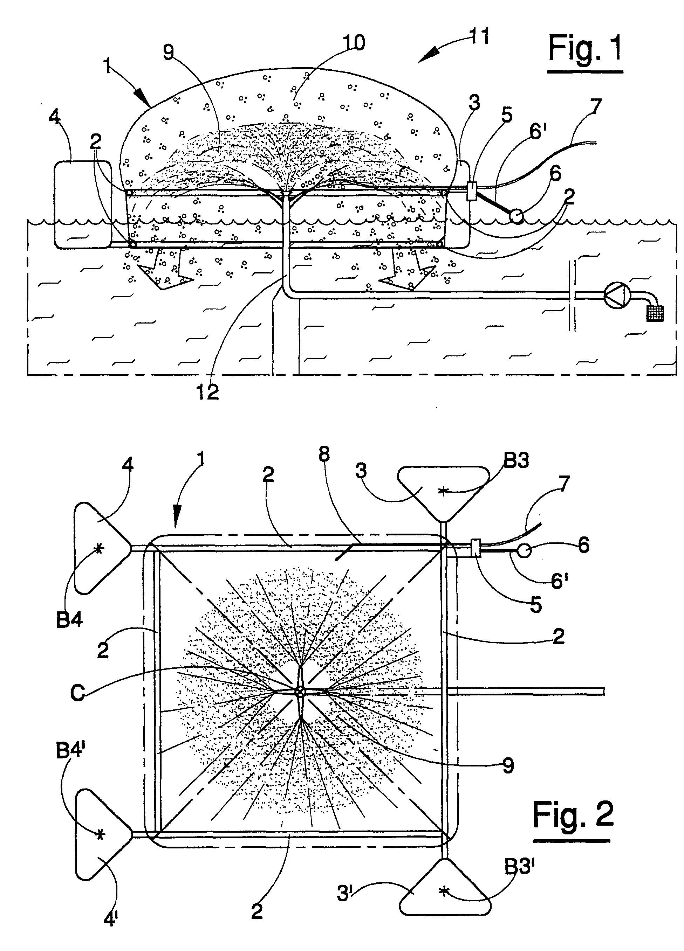

In particular, Fig. 1 shows a partially sectioned side view of a first apparatus for oxygenating water in a basin constructed in accordance with the invention;

Fig. 2 shows a plan view of this apparatus, while Fig. 3 shows again a partially sectioned side view of the same apparatus in a different operating condition from that of Fig. 1;

Figs. 4, 5 and 6 show a second example of embodiment, where, in particular, Fig. 4 shows a longitudinally sectioned side view of this apparatus, Fig. 5 shows a plan view, and Fig. 6 shows again a partially transversely sectioned side view of the same apparatus; Finally, Figs. 7 and 8 show respectively a cross-sectional view and a plan view of a third example of embodiment.

### Detailed description of the preferred embodiments

With reference to these figures, 1 denotes an inflatable cover made of air-tight material, such as, for example, a sheet or layer of plastic material in which bottom edges are fixed underneath the water surface to the base of a frame 2 with a quadrangular shape which is intended to float in a basin since it is supported by four floats 3,3';4,4' rigidly connected thereto.

It is envisaged that the arrangement of the four floats 3,3';4,4' is asymmetrical with respect to the area occupied by the frame 2 and, in particular, that the segment joining together the centre of gravitational thrust B3,B3' of the floats 3,3' is closer to the centre C of the cover 1 than the segment B4,B4' joining together the centres of gravitational thrust of the floats 4,4'. The assembly 1,2,3,3',4,4' basically forms a raft 11 on which the air-tight cover 1 is arranged in an asymmetrical manner with respect to the floating polygon 3,3',4,4'.

It is envisaged that a shut-off valve 5, which is rigidly connected to the frame 2 and controlled by a ball float 6 by means of a rigid connection arm 6', is mounted in the vicinity of the segment which joins together the floats 3,3'.

This valve 5 intercepts a pipe 7 for supplying the oxygen which is introduced inside the cover 1 by means of the oxygen supply tube 8.

The operating principle is as follows:

An apparatus as illustrated in Figs. 1, 2 and 3 is arranged above any known apparatus for aerating/oxygenating water in a basin, such as, for example, a propeller immersed in the water and rotating about a vertical axis so as to form an upwards jet emerging from the water, or in the specific case an upwards jet of water created by a pump which draws water from a zone which is low in oxygen, or another known apparatus intended, using known means, to increase the area of exchange between water and overlying atmosphere. The example shown in Figs. 1, 2 and 3 shows a jet 9 pulsed upwards by a fixed pipe 12; it is envisaged that the jet 9 is suitably atomised into droplets in order to increase the exchange area for example by means of the insertion of special nozzles, or disks or diaphragms for deflecting the jet, etc.

It is not necessary to fasten the raft 11 and the fixed piping 12 together since their position with respect to each other is automatically centered by the edges of the jet 9 striking the walls of the cover 1, which results in stability of the relative positions, in particular in a large basin where the current due to the movement of the water is very limited.

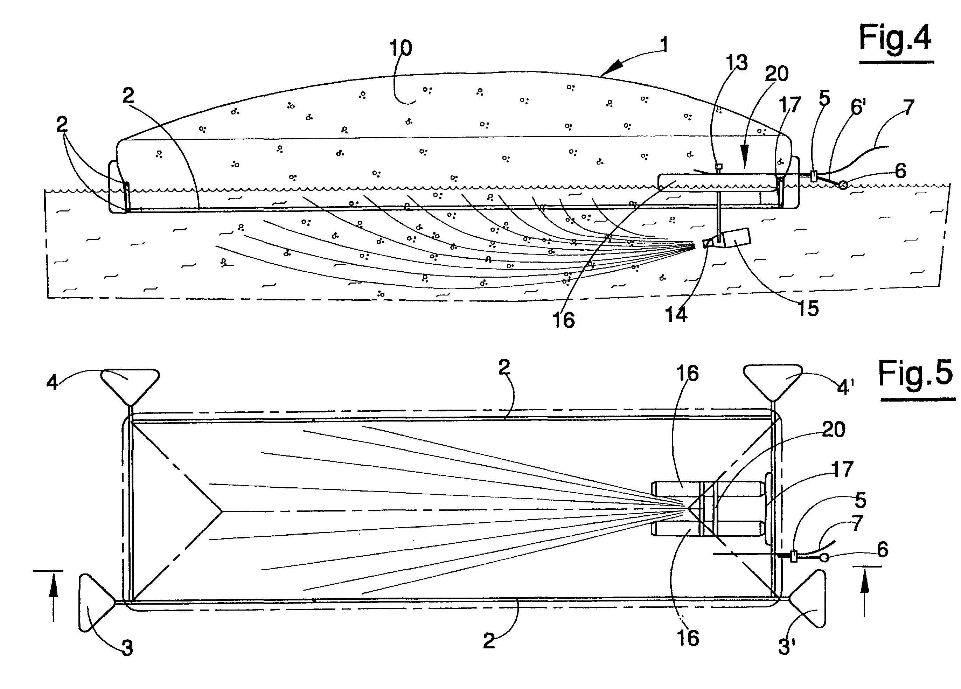

If it is required to obtain stable relative positions of the cover 1 and jet 9, simple tie-rods (not shown in the Figures) or simple buffer cushions, as shown in the example according to Figs. 4, 5 and 6, may be installed in such a way as to allow, in any case, articulation of the relative movement between the raft 11 and the water moving device.

The atmosphere 10 in contact with the jet 9 is contained completely by means of insertion of a sealed hood consisting of a cover 1, a siphon seal being formed along the perimeter of the cover 1, owing to the immersion, underneath the water surface, of the bottom edges of the cover 1 since it is secured in a continuous manner to the base of the frame 2.

It is envisaged that oxygen, or a gaseous mixture rich in oxygen, is introduced inside the cover so as to increase the transfer of oxygen to the water.

The introduction of oxygen is performed by means of the supply pipe 8 which is shut off by the float valve 5.

When the oxygen pressure within the atmosphere 10 is high, as for example in the case of Fig. 1, the valve 5 tends to close off the oxygen supply since the raft 11 is floating at a high level. In these conditions, the floating position of the raft 11 will be, for example, horizontal, as illustrated in Fig. 1.

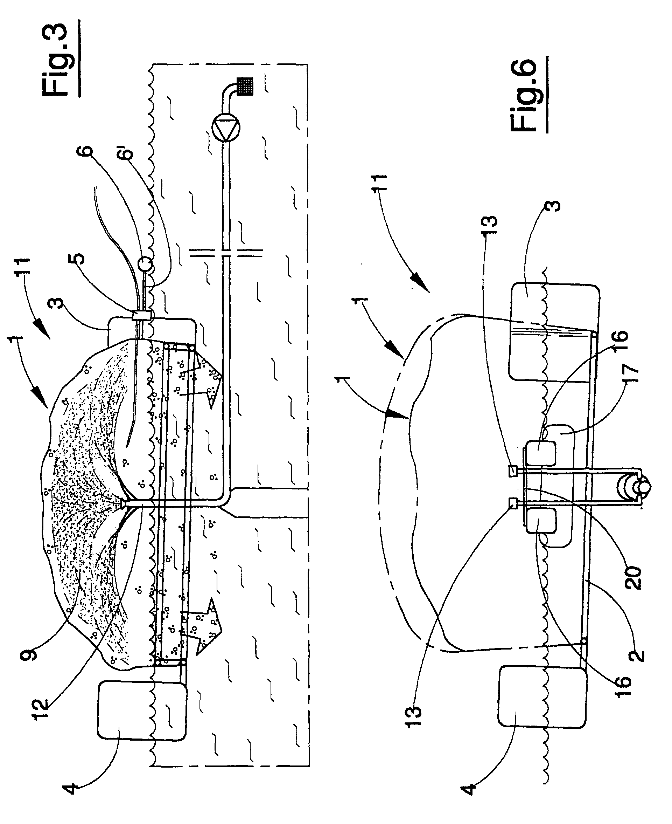

When the pressure inside the cover 1 decreases, as illustrated in Fig. 3, the floating thrust of the raft also decreases.

The raft will therefore lower in an asymmetrical manner, in particular in the region of the floats 3,3', causing raising of the arm 6' of the valve 5, which opens the oxygen supply, re-establishing a correct pressure value inside the cover 1.

The object of maintaining inside the cover 1 an oxygen-rich atmosphere 10 at more or less constant pressure values, and also the object of preventing an excessive supply of oxygen from causing losses into the atmosphere, are thus achieved.

A second example of embodiment is illustrated in Figs. 4, 5 and 6, where the aeration and oxygenation device consists of a known floating apparatus 20 for drawing in oxygen by means of a surface inlet 13, and introduction of oxygen is performed by an underwater propeller 14 moved by an electric motor 15.

In this case, the cover 1 has a long shape so as to allow most of the oxygen bubbles not absorbed by the water to surface inside it, as illustrated in Fig. 4.

The known oxygenation device 20 is supported by two torpedo floats 16; a support cushion 17 is provided between the oxygenation device 20 and the frame 2.

This support cushion 17 allows the raft 11 and the oxygenation device 20 to float independently so as to obtain also in this case the opening or closing of the float valve 5 depending on the floating depth of the raft 11, without altering the position of the oxygenation device 11.

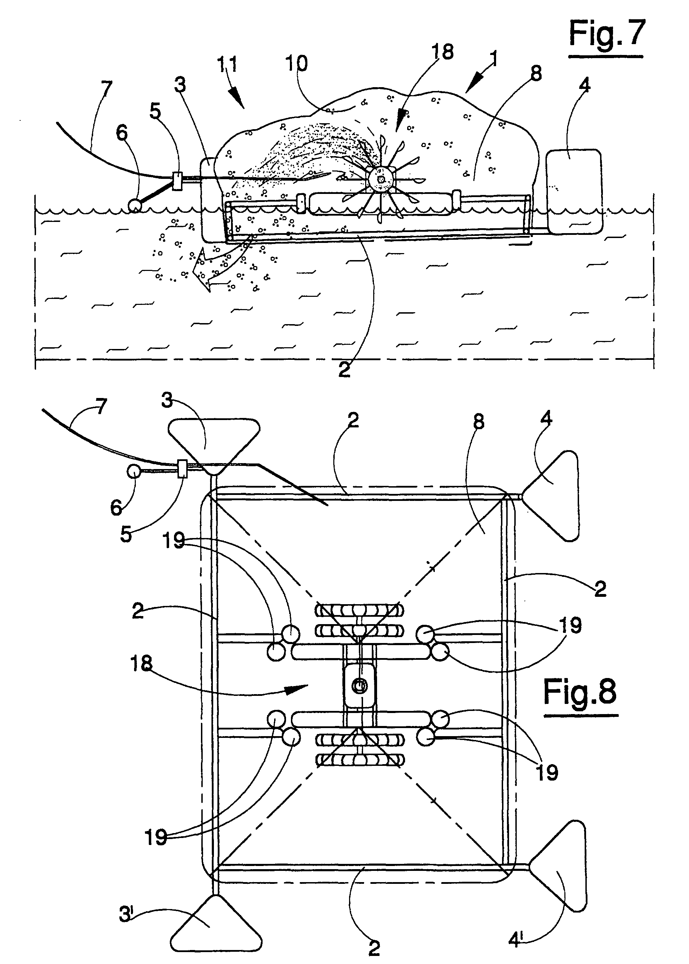

A third example of embodiment is illustrated in Figs. 7 and 8, where the oxygenation device consists of a known wheel with blades 18, which is supported by two torpedo floats 16.

It is envisaged that the oxygenation device 18 may float independently from the raft 11, support cushions 19 being arranged between each of them.

Instead of the support cushions, centering of the oxygenation device 18 and the cover 1 may be achieved by means of simple direct mutual bearing contact (not shown in the Figures) between the oxygenation device 18 and the frame 2.

In the example mentioned, the objects may also be achieved, according to a variation of embodiment, by joining together the oxygenation device 18 and the raft 11 using conventional means (bolts, etc.) not shown in the Figures.

In this case also a float valve 5 is provided, said valve being integral with the frame 2 of the raft and intercepting the flow of oxygen supplied by the pipe 7 so as to introduce it inside the cover 1 by means of the tube 8; it is envisaged that when the internal high pressure of the oxygen raises the floating line of the raft, the valve 5 closes the flow of oxygen.

The operating principle is similar to that described for the preceding examples.

The object not only of avoiding dispersion of oxygen into the atmosphere, but also that of obtaining inside the cover 1 a permanently high oxygen pressure, and hence excellent transfer of oxygen into the water in all operating conditions, are thus achieved.

The invention may also be applied to any existing water aeration/oxygenation device, with the sole requirement that the dimensions of the cover 1 must be adapted to the radius of action and the dimensions of the aeration device.

## Claims

1. Apparatus for oxygenating water in a basin, consisting of a cover which defines a closed volume above a device for oxygenation/mechanical mixing of the water, the introduction of oxygen into this closed volume being envisaged, **characterized in that** the cover (1) is mounted above a frame (2) so as to form as a whole a raft (11) having floating means (3,3';4,4') provided with a shut-off valve (5) intended to regulate the supply of oxygen and controlled by a float (6); the arrangement of the floating means (3, 3';4, 4') being asymmetrical with respect to the area occupied by the frame (2) to which the cover (1) is fastened.

2. Apparatus according to Claim 1, **characterized in that** the cover (1) is made of inflatable material such as, for example, an air-tight layer or sheet of plastic.

3. Apparatus according to Claim 1, **characterized in that** it envuisages the arrangement of support cushions (17; 19) between the raft (11) and the oxygenation device (12; 18; 20).

4. Apparatus according to Claim 3, **characterized in that** it envisages the arrangement, in between, of tie-rods instead of support cushions.

5. Apparatus according to Claim 2, **characterized in that** it envisages a direct mutual bearing contact between the raft (11) and oxygenation device (18).

6. Apparatus according to Claim 2, **characterized in that** it envisages the integral locking together of the raft (11) and the oxygenation/aeration device (12; 18; 20).

## Patentansprüche

1. Vorrichtung zur Sauerstoffanreicherung von Wasser in einem Becken, bestehend aus einer Abdeckung, welche ein geschlossenes Volumen oberhalb einer Vorrichtung zur Sauerstoffanreicherung/mechanischen Mischung des Wassers beschreibt, wobei die Eingabe von Sauerstoff in dieses geschlossene Volumen vorgesehen ist, **dadurch gekennzeichnet, dass** die Abdeckung (1) über einem Rahmen (2) montiert ist, so dass insgesamt ein Floss (11) gebildet wird, welches Schwimmkörper (3, 3'; 4, 4') aufweist und mit einem Absperrventil (5) versehen ist, welches dazu dient, den Zufluss von Sauerstoff zu regulieren, und das von einem Schwimmer (6) gesteuert wird, wobei die Anordnung der Schwimmkörper (3, 3'; 4, 4') im Verhältnis zu dem von dem Rahmen (2), an welchem die Abdeckung (1) befestigt ist, belegten Bereich asymmetrisch erfolgt.

2. Vorrichtung nach Patentanspruch 1, **dadurch gekennzeichnet, dass** die Abdeckung (1) aus aufblasbarem Material hergestellt ist, wie zum Beispiel aus einer luftdicht abschliessenden Schicht oder Folie aus Kunststoff.

3. Vorrichtung nach Patentanspruch 1, **dadurch gekennzeichnet, dass** die Anordnung von Stützkissen (17, 19) zwischen dem Floss (11) und der Vorrichtung zur Sauerstoffanreicherung (12, 18, 20) vorgesehen ist.

4. Vorrichtung nach Patentanspruch 3, **dadurch gekennzeichnet, dass** anstelle von Stützkissen das Zwischensetzen von Zugankern vorgesehen ist.

5. Vorrichtung nach Patentanspruch 2, **dadurch gekennzeichnet, dass** ein direkter gegenseitiger Auflagekontakt zwischen dem Floss (11) und der Vorrichtung zur Sauerstoffanreicherung (18) vorgesehen ist.

6. Vorrichtung nach Patentanspruch 2, **dadurch gekennzeichnet, dass** das feste Zusammenschliessen des Flosses (11) und der Vorrichtung (12, 18, 20) zur Sauerstoffanreicherung/Belüftung vorgesehen ist.

## Revendications

1. Appareil d'oxygénation de l'eau dans un bassin, constitué d'une couverture définissant un volume clos au-dessus d'un dispositif d'oxygénation/mélange mécanique de l'eau, étant prévue l'introduction d'oxygène dans ce volume clos, **caractérisé en ce que** la couverture (1) est montée sur un cadre (2) de manière à former dans son ensemble un radeau (11) présentant des moyens de flottage (3, 3'; 4, 4') et étant pourvu d'une vanne de coupure (5) destinée à réguler le flux d'oxygène et contrôlée par un flotteur (6); la disposition des moyens de flottage (3, 3'; 4, 4') étant assymétrique par rapport à l'aire occupée par le cadre (2) sur lequel est fixée la couverture (1).

2. Appareil selon la revendication 1, **caractérisé en ce que** la couverture (1) est réalisée dans un matériau gonflable tel que, par exemple, une toile hermétique ou une feuille de plastique.

3. Appareil selon la revendication 1, **caractérisé en ce qu'**il prévoit l'interposition de coussins de support (17; 19) entre le radeau (11) et le dispositif d'oxygénation (12; 18; 20).

4. Appareil selon la revendication 3, **caractérisé en ce qu'**il prévoit l'interposition de barres d'accouplement au lieu des coussins de support.

5. Appareil selon la revendication 2, **caractérisé en ce qu'**il prévoit un contact direct de support mutuel entre le radeau (11) et le dispositif d'oxygénation (18).

6. Appareil selon la revendication 2, **caractérisé en ce qu'**il prévoit un blocage rendant solidaires l'un de l'autre le radeau (11) et le dispositif d'oxygénation/aération (12; 18; 20).
